# EUROPÄISCHE PATENTANMELDUNG

(11) **EP 4 730 272 A1**
(43) Veröffentlichungstag der Anmeldung: **22.04.2026**
(21) Anmeldenummer: 24207162.9
(22) Anmeldetag: 17.10.2024
(51) Int. Cl.: G06V 10/80, G06V 10/82, G06V 20/52

(54) **ERKENNUNG UND KLASSIFIZIERUNG VON OBJEKTEN FÜR DIE ÜBERWACHUNG MINDESTENS EINER MASCHINE**

(71) Anmelder: SICK AG, 79183 Waldkirch (DE)
(72) Erfinder: Hammes, Markus, 79117 Freiburg (DE)

(57) **Zusammenfassung**

Es wird eine Vorrichtung (10) zur sicheren Erkennung und Klassifizierung von Objekten für die Überwachung mindestens einer Maschine (12) angegeben, wobei die Vorrichtung (10) mindestens einen Bildsensor (18) für die Erfassung von zweidimensionalen Bilddaten und dreidimensionalen Bilddaten sowie eine Steuer- und Auswertungseinheit (22) aufweist, die für ein Verfahren des maschinellen Lernens zur Erkennung und Klassifizierung der Objekte ausgebildet ist, das einen ersten Eingangskanal (26a) für zweidimensionale Bilddaten und einen zweiten Eingangskanal (26b) für dreidimensionale Bilddaten aufweist und somit aus den zweidimensionalen Bilddaten und dreidimensionalen Bilddaten gemeinsam die Objekte erkennt und klassifiziert. Dabei weist das Verfahren des maschinellen Lernens einen dritten Eingangskanal (26c) für aus Bilddaten des Bildsensors (18) gewonnene weitere Bildmerkmale auf, und es erkennt und klassifiziert somit aus einer zusätzlichen Bildmodalität neben zweidimensionalen und dreidimensionalen Bilddaten gemeinsam die Objekte.

## Beschreibung

Die Erfindung betrifft eine Vorrichtung und ein Verfahren zur sicheren Erkennung und Klassifizierung von Objekten für die Überwachung mindestens einer Maschine nach dem Oberbegriff von Anspruch 1 beziehungsweise 15.

In der berührungslosen Überwachung zur Absicherung von Gefahren, etwa Maschinen im industriellen Umfeld oder Fahrzeuge in Logistikanwendungen, werden sehr häufig optoelektronische Sensoren eingesetzt. Gerade für komplexere Anwendungen sind hier vornehmlich ein Laserscanner und eine Kamera und insbesondere 3D-Kamera zu nennen. Eine 3D-Kamera misst einen Abstand und gewinnt dadurch eine Tiefeninformation. Die erfassten dreidimensionalen Bilddaten mit Abstands- oder Entfernungswerten für die einzelnen Pixel werden auch als 3D-Bild, Entfernungsbild oder Tiefenkarte bezeichnet. 3D-Kameras gibt es in verschiedenen Technologien, darunter Lichtlaufzeit-, Stereoskopie- und Projektionsverfahren oder plenoptische Kameras.

Nach den bisherigen Ansätzen in der Sicherheitstechnik wird regelmäßig ein Schutzfeld überwacht, das während des Betriebs der Maschine vom Bedienpersonal nicht betreten werden darf. Erkennt der Sensor einen unzulässigen Schutzfeldeingriff, etwa ein Bein einer Bedienperson, so wird die Maschine in einen sicheren Zustand überführt. In der Sicherheitstechnik eingesetzte Sensoren müssen besonders zuverlässig arbeiten und deshalb hohe Sicherheitsanforderungen erfüllen, beispielsweise die Norm EN13849 für Maschinensicherheit und die Gerätenorm EN61496 für berührungslos wirkende Schutzeinrichtungen (BWS). Zur Erfüllung dieser Sicherheitsnormen sind eine Reihe von Maßnahmen zu treffen, wie beispielsweise sichere elektronische Auswertung durch redundante, diversitäre Elektronik oder verschiedene Funktionsüberwachungen, speziell die Überwachung der Verschmutzung optischer Bauteile einschließlich einer Frontscheibe.

Für moderne Absicherungskonzepte im industriellen Fertigungs- und Logistikumfeld hingegen besteht der Wunsch, die Sicherheitsbetrachtung auf feiner granulierte Informationen zu stützen, insbesondere auf Positionen von Objekten und Personen sowie eine Klassifizierung, die eine Unterscheidung zwischen Person und anderem Objekt ermöglicht. Diese Funktionalität bieten derzeit nur Verfahren der künstlichen Intelligenz (Kl), namentlich tiefe Faltungsnetze (CNN, Convolutional Neural Network). Deren Leistungsfähigkeit gründet sich auch auf die umfangreichen, frei zugänglichen Bilddatenbanken, aus denen Trainingsdaten bezogen werden können.

Trotzdem fehlt es derzeit an einer Freigabe für den Einsatz solcher KI-Systeme in sicherheitstechnischen Anwendungen. Dem stehen nicht nur formale Hürden im Wege, wie fehlende Normgrundlagen. Auch sehr leistungsstarke neuronale Netze erreichen auf Einzelbildniveau mangels hinreichender Genauigkeit und Robustheit noch nicht die in der Sicherheitstechnik geforderten Restfehlerwahrscheinlichkeiten. Und selbst wenn die Anforderungen auf den Validierungsdaten erfüllt sind, kann es bei Bildstörungen durch Fremdlicht, Bewegungsunschärfe, Verschmutzung oder Kontrastarmut vorkommen, dass die Genauigkeit stark abnimmt, und das wird in einer sicherheitstechnischen Anwendung nicht toleriert.

Es sind tiefe Faltungsnetze bekannt, die drei Eingangskanäle für die drei Farbkanäle "R", "G" und "B" eines Farbbildes aufweisen. Die Merkmale gewöhnlicher Farbbilder sind jedoch nur eingeschränkt zuverlässig. Die Aufspaltung in die Farbkanäle führt nur zu wenig Gewinn hinsichtlich der für eine Sicherheitsanwendung erwarteten Robustheit, weil Bildstörungen, von denen oben einige genannt sind, die verschiedenen Farben in sehr ähnlicher Weise betreffen.

Die Arbeit von Weng, Xinshuo, et al., "Gnn3dmot: Graph neural network for 3d multiobject tracking with 2d-3d multi-feature learning", Proceedings of the IEEE/CVF Conference on Computer Vision and Pattern Recognition, 2020 befasst sich mit neuronalen Netzen zur Objektverfolgung. Objekte werden für eine Objektverfolgung von Frame zu Frame anhand von 2D- und 3D-Bildmerkmalen wiedererkannt. Das ist aber nicht für eine sicherheitstechnische Anwendung gedacht und erreicht keine dafür geforderte Genauigkeit und Robustheit.

Es ist daher Aufgabe der Erfindung, eine für Anwendungen in der Sicherheitstechnik geeignete Erkennungs- und Klassifizierungsmöglichkeit aufzufinden.

Diese Aufgabe wird durch eine Vorrichtung und ein Verfahren zur sicheren Erkennung und Klassifizierung von Objekten für die Überwachung mindestens einer Maschine nach Anspruch 1 beziehungsweise 15 gelöst. Die Überwachung dient der sicherheitstechnischen Anwendung beziehungsweise der Unfallvermeidung oder dem Schutz von Personen im Umfeld der Maschine. Sicher und Sicherheit bedeuten wie in der gesamten Beschreibung, dass Maßnahmen ergriffen sind, um Fehler bis zu einem spezifizierten Sicherheitsniveau zu beherrschen beziehungsweise Vorschriften einer einschlägigen Sicherheitsnorm für Maschinensicherheit oder berührungslos wirkende Schutzeinrichtungen einzuhalten, von denen einleitend einige genannt sind. Nicht sicher ist der Gegenbegriff zu sicher, für nicht sichere Geräte, Übertragungswege, Auswertungen und dergleichen sind demnach die genannten Anforderungen an Fehlersicherheit nicht erfüllt.

Mindestens ein Bildsensor erfasst zweidimensionale Bilddaten und dreidimensionale Bilddaten. Das sind typischerweise Bilder von einem Umfeld der Maschine, es kann aber auch ein etwas weiter entfernter sicherheitsrelevanter Bereich sein, etwa ein Zugangsbereich. Die Bilddaten werden zur Erkennung und Klassifizierung der Objekte in einer Steuer- und Auswertungseinheit mit einem Verfahren des maschinellen Lernens weiterverarbeitet. Die Steuer- und Auswertungseinheit ist eine beliebige digitale Recheneinheit, die beispielsweise gemeinsam mit dem Bildsensor in einem Gehäuse einer Kamera untergebracht oder an ein solches Gerät angeschlossen ist. Ein Verfahren des maschinellen Lernens zeichnet sich dadurch aus, dass nur eine lernende Struktur vorgegeben ist, während die konkreten Auswertungen aus Trainingsdaten gelernt werden. Im Gegensatz dazu würde ein klassisches Verfahren ein von Hand definiertes Vorgehen etwa in Form eines Algorithmus' angeben. Trotz der nicht völligen begrifflichen Übereinstimmung kann ein Verfahren des maschinellen Lernens als ein Verfahren der künstlichen Intelligenz aufgefasst werden.

Das Verfahren des maschinellen Lernens weist einen ersten Eingangskanal für zweidimensionale Bilddaten und einen zweiten Eingangskanal für dreidimensionale Bilddaten auf. Es trifft dann seine Entscheidung über die Erkennung und Klassifizierung der Objekte gemeinsam aus den zugeführten zwei- und dreidimensionalen Bilddaten. Die Nummerierung der Eingangskanäle hat keine inhaltliche Bedeutung, sie soll lediglich die Eingangskanäle begrifflich auseinanderhalten.

Die Erfindung geht von dem Grundgedanken einer diversitären dreikanaligen Eingangsarchitektur aus. Es wird also ein zusätzlicher dritter Eingangskanal des Verfahrens des maschinellen Lernens geschaffen. Aus den Bilddaten des Bildsensors werden weitere Bilddaten einer zusätzlichen Bildmodalität neben zweidimensionalen und dreidimensionalen Bilddaten abgeleitet, und diese weiteren Bilddaten werden dem dritten Eingangskanal zugeführt. Das Verfahren des maschinellen Lernens trifft seine Entscheidung über die Erkennung und Klassifizierung der Objekte aus den Bilddaten an den drei Eingangskanälen.

Die Erfindung hat den Vorteil, dass durch die dreikanalige Eingangsarchitektur mit hoher Diversität oder Komplementarität der Bildmerkmale eine sehr gute Zuverlässigkeit und Robustheit erreicht wird. Bekannte Störeinflüsse, wie Umgebungslicht, fehlender Farb- oder Remissionskontrast, Objektbewegung oder Schärfeverlust, beeinflussen mindestens einen der Bildkanäle nur wenig und beeinträchtigen die Detektion daher nicht. Die Robustheit der Klassifizierung kann zusätzlich trainiert und getestet werden, indem die Gewichtungsfaktoren der drei Eingangskanäle während des Trainings und in statistischen Tests etwa im Validierungsprozess variiert werden. Das führt zu einer verbesserten Nachvollziehbarkeit insbesondere hinsichtlich der Robustheit gegenüber bestimmten Störeinflüssen.

Die zweidimensionalen Bilddaten für den ersten Eingangskanal weisen bevorzugt ein Grauwertbild auf, insbesondere ein unter Infrarotbeleuchtung aufgenommenes Grauwertbild. Die Objekterkennung und Klassifizierung von Objekten in einem Grauwertbild kann auf etablierte Verfahren des maschinellen Lernens und umfangreiche vorhandene Trainingsdaten zurückgreifen. Das Grauwertbild kann unter natürlicher Beleuchtung aufgenommen werden. Vorzugsweise wird eine eigene aktive Beleuchtung verwendet, noch bevorzugter im Infrarotbereich. Eine zusätzliche Differenzierung in Farben ist prinzipiell denkbar, wobei Infrarot einen eigenen Farbkanal darstellen kann, aber die Erfindung stützt sich primär auf Eingangsmodalitäten, die weniger Abhängigkeiten zueinander zeigen als Farben.

Die dreidimensionalen Bilddaten für den zweiten Eingangskanal weisen bevorzugt eine Tiefenkarte auf. Im Gegensatz zu beispielsweise einer 3D-Punktewolke hat eine Tiefenkarte den Vorteil eines den zweidimensionalen Bilddaten entsprechenden Formats. Die Architektur in dem Verfahren des maschinellen Lernens kann daher den ersten und zweiten Eingangskanal in einer gleichartigen Weise einbinden. Dabei ist vorzugsweise, aber nicht zwingend die Auflösung der Tiefenkarte diejenige der zweidimensionalen Bilddaten. Dies lässt sich durch Vorverarbeitung (Up- oder Downsampling) immer erreichen.

Es ist weiterhin denkbar, die dreidimensionalen Bilddaten vorbereitend aus einem beliebigen originären Format, etwa eine 3D-Punktwolke, in eine Tiefenkarte zu überführen.

Die Steuer- und Auswertungseinheit ist bevorzugt dafür ausgebildet, Differenzbilddaten aus zu verschiedenen Zeitpunkten aufgenommenen zweidimensionalen Bilddaten zu erzeugen und dem dritten Eingangskanal zuzuführen. Die über den dritten Eingangskanal eingeführte zusätzliche Bildmodalität ist damit ein Differenzbild, das Veränderungen und vor allem Bewegung anzeigt. Der dritte Eingangskanal trägt damit in erster Linie Informationsinhalte zu bewegten Vordergrundobjekten bei, die für eine Sicherheitsüberwachung besonders wichtig sind. Zudem sind die Differenzen oder Bewegungen sehr komplementär zu den statischen Bildmerkmalen der beiden anderen Eingangskanäle, und sie zeigen ein sehr unterschiedliches Verhalten gegenüber Störeinflüssen. Damit wird eine besonders hohe Robustheit und Verlässlichkeit des Gesamtsystems über die drei diversitären Eingangskanäle erzielt.

Die Steuer- und Auswertungseinheit ist dafür ausgebildet, Differenzbilddaten aus zu verschiedenen Zeitpunkten aufgenommenen dreidimensionalen Bilddaten zu erzeugen und dem dritten Eingangskanal zuzuführen. Hier gelten die Ausführungen des Vorabsatzes entsprechend. Zudem ist das Differenzbild aus dreidimensionalen Bilddaten sehr viel robuster gegen Änderungen der Lichtverhältnisse und damit in vielen Fällen relevanter für die interessierenden Objekte. Veränderungen und Bewegungen können aber unabhängig von dieser Feststellung wahlweise je nach Ausführungsform in zweidimensionalen oder dreidimensionalen Bilddaten erkannt werden. Denkbar wäre auch ein vierter Eingangskanal, um Veränderungen sowohl aus zweidimensionalen Bilddaten als auch aus dreidimensionalen Bilddaten zu bewerten.

Die Erkennung und Klassifizierung umfasst bevorzugt eine Personenerkennung. Für die sicherheitstechnische Anwendung sind in der Regel Personen die maßgeblichen Objekte. Zwar sind im Sinne der Produktivität auch Unfälle mit einem sonstigen Objekt zu vermeiden, Gegenstand der Sicherheitstechnik ist aber die Wahrung der Gesundheit von Personen. Die Klassifizierung kann eine binäre Einordnung Person/keine Person sein, oder es werden Objekte, die nicht als Personen klassifiziert werden, gar nicht erst als Objekte erkannt. Es entsteht ein 3D-System mit gezielter Personenerkennung.

Die Erkennung und Klassifizierung umfasst bevorzugt eine Körperteilerkennung. Es wird also nicht nur eine Person als solche erkannt, sondern nach ihrer Pose oder bestimmten Körperteilen wie Hand, Arm, Bein, Rumpf oder Kopf unterschieden. Die Pose kann in eine Sicherheitsbetrachtung einbezogen werden, weil gewisse Posen wie eine sich von der Maschine wegdrehende Person deutlich weniger oder gar kein Risiko darstellen. Eine Differenzierung nach Körperteilen ermöglicht unterschiedliche Sicherheitsniveaus, dies ermöglicht analoge Auswertungen wie das Auflösungsvermögen eines klassischen Sicherheitssensors, etwa eines Lichtgitters mit einem bestimmten, auf ein Körperteil abgestimmten Abstand der Lichtstrahlen.

Die Erkennung und Klassifizierung umfasst bevorzugt eine Bestimmung von Position und/oder Bewegung der Objekte. Während in manchen Anwendungen ausreichen kann zu wissen, ob überhaupt ein Objekt oder eine Person im Sichtbereich vorhanden ist, ermöglicht eine Position eine viel differenziertere Sicherheitsbetrachtung. Diese Position kann dank der dreidimensionalen Bilddaten nicht lediglich eine Position innerhalb eines Bildes, sondern bei entsprechend registrierter Montage des Bildsensors eine dreidimensionale Raumposition sein. Mit Bewegung ist an dieser Stelle nicht die Differenz der Bildmodalität eines dritten Eingangskanals gemeint, sondern eine ausgewertete Bewegung eines erkannten Objekts im Raum. Position und Bewegung kann auf Ebene von Personen, aber auch Körperteilen bestimmt werden.

Die Erkennung und Klassifizierung umfasst bevorzugt eine sichere Objektverfolgung. Dafür wird ein Objekt über die Zeit, d.h. mehrere Aufnahmen des Bildsensors hinweg, wiedererkannt und dessen jeweilige Position bestimmt. Sicher bedeutet wie bereits definiert, dass die Objektverfolgung einer Sicherheitsbetrachtung zugrunde gelegt werden kann, weil dank der drei Eingangskanäle die erforderliche Robustheit und Verlässlichkeit erreicht wird. Die Objektverfolgung, die zunächst die Vergangenheit betrifft, kann eine Prognose für die Zukunft beinhalten, etwa mittels Kalmanfiltern oder eines erweiterten oder zusätzlichen Verfahrens des maschinellen Lernens. Eine sichere Objektverfolgung ist eine wichtige Grundfunktion für verschiedenste Automatisierungsanwendungen in Fertigung und Logistik, etwa wenn ein Fahrzeug einer Person ausweichen und nicht einfach anhalten soll. Gleichermaßen sollen Roboter die Kenntnis über die genaue Position einer Person in der Nähe dazu nutzen, um auf andere Arbeitsbereiche auszuweichen und die produktiven Prozesse aufrecht zu erhalten. Zukünftige Absicherungslösungen, die auf übergeordneter Ebene Einfluss auf die automatischen Prozesse in einem größeren Bereich bis hin zu einer ganzen Halle oder Fabrik nehmen, sind ebenfalls auf die Kenntnis der Positionen aller Personen angewiesen. All dies lässt sich teilweise schon auf Basis momentaner sicherer Positionen erreichen, aber eine sichere Objektverfolgung bietet noch mehr Möglichkeiten.

Die Steuer- und Auswertungseinheit ist bevorzugt für einen Quervergleich ausgebildet, der die Übereinstimmung der Klassifikation der Objekte aus den Eingangskanälen bewertet. Es werden also mit anderen Worten die Ergebnisse der Erkennung und Klassifikation miteinander verglichen, die sich aus den verschiedenen Eingangsmodalitäten an den Eingangskanälen zunächst einzeln ergeben. Dem kann ein Gütemaß der Klassifikation zugrunde gelegt werden, etwa das Maß, das in einem Softmax-Layer ausgewertet wird. Für einen Quervergleich muss das Verfahren des maschinellen Lernens entsprechend aufgeschlüsselte Ergebnisse liefern, beziehungsweise diese Ergebnisse werden früh genug in der Verarbeitungskette abgegriffen, ehe insbesondere das Verfahren des maschinellen Lernens zu einer gemeinsamen Entscheidung über alle Eingangsmodalitäten gelangt, in der ein Quervergleich nicht mehr möglich wäre. Der Quervergleich kann alle Eingangskanäle zugleich oder jeweils zwei Eingangskanäle paarweise einbeziehen, insbesondere mehrere oder alle denkbaren Paare. Anhand der Bewertung der Übereinstimmung - oder fehlenden Übereinstimmung - in dem Quervergleich können Schlüsse gezogen werden, ob womöglich eine Störung vorliegt und welcher Art sie sein könnte. Beispielsweise kann sich eine Verschmutzung dadurch äußern, dass der Kontrastverlust in den zweidimensionalen Bilddaten zu einem Einbruch der Klassifikationsgüte führt, während diese in den dreidimensionalen Bilddaten nach wie vor hoch ist. Umgekehrt würde eine mechanische Verschiebung kaum Auswirkungen auf die Detektion in den zweidimensionalen Bilddaten haben, während dreidimensionale Bilddaten nach einer Berücksichtigung eines eingelernten Hintergrundes stark beeinträchtigt wären. Nach derartigen Regeln können Signaturen für bestimmte Fehlerbilder erzeugt werden. Einige Fehlerbilder können noch toleriert werden, andere nicht mehr, und jedenfalls steht ein weiteres Diagnosewerkzeug zur Verfügung.

Das Verfahren des maschinellen Lernens weist bevorzugt ein neuronales Netz auf, insbesondere ein tiefes Faltungsnetz (CNN, Convolutional Neual Network). Hier kann auf eine Vielzahl vorhandener und bewährter Architekturen zumindest als Baustein beziehungsweise Grundlage zurückgegriffen werden.

Das neuronale Netz weist bevorzugt eine dreikanalige Architektur mit drei Netz-Eingangskanälen auf, wobei der erste Eingangskanal, der zweite Eingangskanal und der dritte Eingangskanal auf die drei Netz-Eingangskanäle geführt sind. Die drei Eingangskanäle finden sich damit in dieser Ausführungsform in der Architektur des neuronalen Netzes wieder. Alternativ wäre beispielsweise eine Vorverarbeitung denkbar, die die Eingangskanäle auf mehr oder weniger Netz-Eingangskanäle führt, oder beispielsweise die Verwendung mehrerer neuronaler Netze für einzelne oder verschiedene Kombinationen der Eingangskanäle. Das neuronale Netz gibt erkannte Objekte, Objektklassen und/oder Merkmale aus, die auf erkannte Objekte und Objektklassen schließen lassen. Zu der Ausgabe können Zusatzinformationen wie eine Position, Bewegung, Unterteilung in Körperteile und dergleichen gehören. Optional ist vorstellbar, die Erkennung auch je Bildmodalität auszugeben, beziehungsweise Konfidenzwerte dazu, um eine Diagnose und Verlässlichkeitsbetrachtung zu erleichtern.

Bevorzugt nutzt das neuronale Netz eine dreikanalige Architektur eines neuronalen Netzes für die Verarbeitung der drei Farbkanäle eines zweidimensionalen Farbbildes. Diese Ausführungsform setzt mit anderen Worten auf einer an sich bekannten Architektur auf. Die dort vorhandenen drei Farbkanäle für rot, grün und blau werden allerdings umgewidmet, nun für die zweidimensionalen Bilddaten, die dreidimensionalen Bilddaten und die weitere Bildmodalität, insbesondere Differenzbilddaten. Die ursprünglichen drei Farbkanäle sind nur eingeschränkt unabhängig voneinander, sie stellen im Sinne der Sicherheitstechnik keine komplementären Merkmale dar. Mit den umgewidmeten Farbkanälen entsteht die dreikanalige, diversitäre Eingangsarchitektur, die somit bekannte Architekturen und insbesondere tiefe Faltungsnetze für die Sicherheitstechnik erschließt.

Das neuronale Netz ist bevorzugt mit Farbbildern vortrainiert, indem während eines Vortrainings jeweils einer der drei Farbkanäle des jeweiligen Farbbildes auf jeweils einen der drei Netz-Eingangskanäle geführt ist. Das neuronale Netz wird also im Vortraining noch entsprechend seiner ursprünglichen RGB-Farbarchitektur verwendet. Hierfür sind sehr große, für die spätere Sicherheitsanwendung noch unspezifische Trainingsdatensätze verfügbar. Eine grundsätzliche Erkennung von Objekten und Zielklassen, insbesondere Personen, ist damit schon möglich. In einem weiteren Training, fortgesetzten Training, Nachtraining oder Finetuning werden dann Trainingsdaten entsprechend den eigentlich vorgesehenen Bildmodalitäten verwendet, also zweidimensionale Bilddaten, dreidimensionale Bilddaten und Bilddaten der weiteren Bildmodalität, insbesondere Differenzbilddaten. Dank des Vortrainings kann der Umfang der spezielleren Trainingsdaten sehr viel kleiner bleiben.

Der Bildsensor erfasst bevorzugt dreidimensionale Bilddaten nach dem Lichtlaufzeitprinzip. Mit anderen Worten wird eine spezielle 3D-Kamera, eine Lichtlaufzeit- oder TOF-Kamera (Time of Flight). Diese 3D-Kamera kann zusätzlich zu Lichtlaufzeiten auch Intensitäten messen und somit ebenfalls die zweidimensionalen Bilddaten liefern. Alternativ sind andere 3D-Verfahren denkbar, beispielsweise Stereoskopie, und/oder eine Aufteilung der 3D- und 2D-Erfassung auf mehrere Bildsensoren beziehungsweise Kameras. Weiterhin ist eine 3D-Erfassung mittels Laserscanner vorstellbar, wobei ein Laserscanner ebenfalls Intensitäten messen oder mit einem zusätzlichen 2D-Bildsensor ausgestattet sein kann.

Die Steuer- und Auswertungseinheit ist bevorzugt dafür ausgebildet, eine Absicherung der Maschine auszulösen, wenn sich ein erkanntes Objekt an einer gefährlichen Position und/oder in einer gefährlichen Bewegung befindet. Es erfolgt somit eine nachgelagerte Beurteilung der Steuer- und Auswertungseinheit, ob ein erkanntes Objekt, eine Objektklasse oder eine Zusatzinformation, wie Position oder Bewegung, zu einer Gefährdung führt, auf die reagiert werden muss. Eine gefährliche Position kann zu nahe an einer Maschine oder einem Maschinenteil sein, mit möglichen Zeitabhängigkeiten oder der Berücksichtigung von Arbeitsabläufen der Maschine. Bewegungen ermöglichen zusätzliche Bewertungen, denn beispielsweise ist eine Bewegung parallel zu der Maschine oder sogar mit einer Teilkomponente davon weg unkritischer als direkt auf die Maschine zu. Auch die Geschwindigkeit kann eine Rolle spielen (Speed-and-Separation-Monitoring). Die Absicherung kann in einem Ausweichen, Verlangsamen oder Anhalten der Maschine oder dem Einnehmen eines sonstigen sicheren Zustands bestehen.

Das erfindungsgemäße Verfahren ist ein computerimplementiertes Verfahren, das beispielsweise in einer Recheneinheit eines optoelektronischen Sensors zur Erfassung der zwei- und/oder dreidimensionalen Bilddaten und/oder einer angeschlossenen Recheneinheit abläuft. Das erfindungsgemäße Verfahren kann auf ähnliche Weise weitergebildet werden wie die Vorrichtung und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Übersichtsdarstellung einer Vorrichtung zur Überwachung einer Maschine;
- Fig. 2: eine schematische Darstellung einer dreikanaligen Architektur eines neuronalen Netzes zur Erkennung und Klassifizierung von Objekten im Umfeld einer Maschine;
- Fig. 3: ein Beispiel für zweidimensionale Bilddaten, die einem der drei Eingangskanäle des neuronalen Netzes gemäß Figur 2 zugeführt werden;
- Fig. 4: ein Beispiel für dreidimensionale Bilddaten, die einem der drei Eingangskanäle des neuronalen Netzes gemäß Figur 2 zugeführt werden;
- Fig. 5: ein Beispiel für Differenzbilddaten, die einem der drei Eingangskanäle des neuronalen Netzes gemäß Figur 2 zugeführt werden; und
- Fig. 6: eine schematische Darstellung der Zuordnung der verschiedenen Bildmodalitäten zu den Eingangskanälen des neuronalen Netzes gemäß Figur 2.

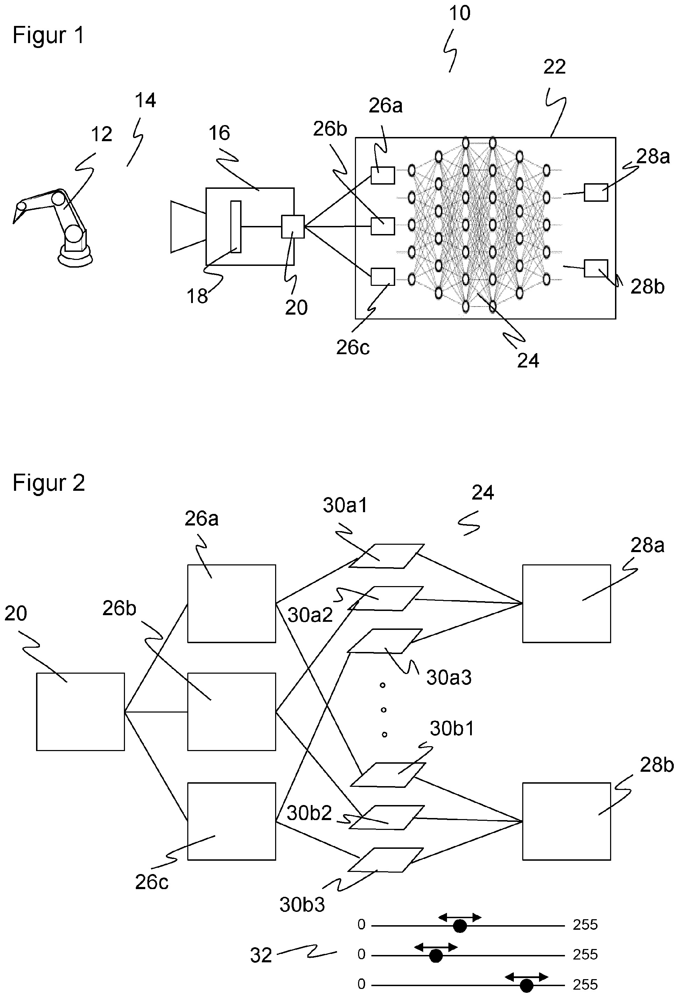

Figur 1 zeigt eine schematische Übersichtsdarstellung einer Vorrichtung 10 zur Überwachung einer Maschine 12. Die Maschine 12 befindet sich in einem Überwachungsbereich 14 eines optoelektronischen Sensors 16, der hier beispielhaft als Kamera mit einem Bildsensor 18, der insbesondere eine Vielzahl zu einer Matrix angeordneter Lichtempfangselemente oder Pixel aufweist, und einer Schnittstelle 20 dargestellt ist. Der optoelektronische Sensor 16 ist in der Lage, zweidimensionale und dreidimensionale Bilddaten zu erfassen. Eine dafür geeignete technische Ausführung ist eine Lichtlaufzeitkamera, andere 3D-Kameras wie eine Stereokamera oder ein Laserscanner wären auch denkbar. Es ist auch möglich, mehrere optoelektronische Sensoren 16 einzusetzen, sei es wie im Falle einer Stereokamera zur Unterstützung der 3D-Erfassung oder zur Gewinnung zusätzlicher Perspektiven für einen größeren Überwachungsbereich, unterschiedliche Ansichten oder die Vermeidung von Abschattungen. Dem optoelektronischen Sensor 16 kann eine nicht dargestellte interne oder externe Beleuchtung zugeordnet sein, insbesondere zur Erzeugung von Infrarotlicht.

Die Bilddaten des Bildsensors 18 werden über die Schnittstelle 20 an eine Steuer- und Auswertungseinheit 22 übergeben. Die Steuer- und Auswertungseinheit 22 kann wie dargestellt eine externe Recheneinheit, alternativ eine interne Recheneinheit des optoelektronischen Sensors 16 oder eine Kombination aus beidem sein. Beispiele für eine interne Recheneinheit sind digitale Rechenbausteine wie ein Mikroprozessor oder eine CPU (Central Processing Unit), ein FPGA (Field Programmable Gate Array), ein DSP (Digital Signal Processor), ein ASIC (Application-Specific Integrated Circuit), ein Kl-Prozessor, eine NPU (Neural Processing Unit), eine GPU (Graphics Processing Unit), eine VPU (Video Processing Unit) oder dergleichen. Eine externe Recheneinheit kann ebenfalls einen dieser digitalen Rechenbausteine aufweisen und insbesondere ein Computer beliebiger Bauart einschließlich Notebooks, Smartphones, Tablets, einer (Sicherheits-)steuerung ebenso sein wie ein lokales Netzwerk, ein Edge-Device oder eine Cloud.

In der Steuer- und Auswertungseinheit 22 ist ein Verfahren des maschinellen Lernens implementiert, insbesondere ein (tiefes) neuronales Netz beziehungsweise Faltungsnetz, das im Folgenden vereinfachend als neuronales Netz 24 bezeichnet wird, ohne damit andere Verfahren des maschinellen Lernens auszuschließen. Die Bilddaten des Bildsensors 18 werden in drei verschiedenen Bildmodalitäten, nämlich zweidimensionalen Bilddaten, dreidimensionalen Bilddaten und einer weiteren daraus abgeleiteten Bildmodalität, insbesondere einer Differenz von zweidimensionalen Bilddaten oder einer Differenz von dreidimensionalen Bilddaten, drei Eingangskanälen 26a-c des neuronalen Netzes 24 zugeführt. Ausgangsseitig liefert das neuronale Netz 24 Informationen über erkannte Objekte und eine zugehörige Klassifizierung, wobei dies zunächst allgemein als Merkmale 28a-b dargestellt ist. Dies wird weiter unten noch genauer erläutert.

Diese Ausgangsinformationen werden ohne eigene Darstellung weiterverarbeitet, um zu einer Sicherheitsbewertung zu kommen, ob also die erkannten Objekte, die Klassen erkannter Objekte und/oder Zusatzinformationen wie deren Position und Bewegungsverhalten eine gefährliche Situation bedeuten. Im Falle drohender Gefahr wird ein sicheres Ausgangssignal erzeugt, um eine sicherheitsgerichtete Reaktion der Maschine 12 einzuleiten, wie ein Verlangsamen, Ausweichen, eine alternative Bewegungsabfolge oder ein Abbremsen erforderlichenfalls bis hin zum Stillsetzen.

Figur 2 zeigt eine schematische Darstellung einer Ausführungsform der Erfindung mit einer dreikanaligen Architektur des neuronalen Netzes 24 zur Erkennung und Klassifizierung von Objekten im Umfeld einer Maschine. Die Erfindung kann auf einer eigenen Architektur mit drei Eingangskanälen 26a-c basieren. Vorzugsweise wird aber auf einem dreikanaligen tiefen Faltungsnetz zur Analyse von Farb- oder RGB-Bildern mit drei Farbkanälen aufgesetzt. Das neuronale Netz 24 weist den Eingangskanälen 26a-c nachgelagert verschiedene Layer oder Ebenen 30a1-30b3 auf. Die Struktur kann noch deutlich komplexer sein als dargestellt und weitere typische Elemente eines neuronalen Netzes 24 aufweisen, wie Faltungslayer, Poolinglayer, vollständig verbundene Layer oder einen Aufmerksamkeitsmechanismus, der von den Transformern bekannt geworden ist. Für die Verarbeitung von Farbbildern sind derartige Architekturen vielfach bekannt und werden daher nicht im Detail beschrieben.

Ursprünglich werden den drei Eingangskanälen 26a-c je ein rotes, grünes und blaues Teilbild eines Farbbildes zugeführt. Erfindungsgemäß werden nun anstelle der RGB-Anteile eines Farbbildes drei unterschiedliche Bildarten oder Modalitäten zugeführt: zweidimensionale Bilddaten beziehungsweise ein Grauwert- oder Intensitätsbild, dreidimensionale Bilddaten oder eine Tiefenkarte und ein Differenzbild. Das Differenzbild entsteht durch Differenzbildung von zu zwei unterschiedlichen Zeitpunkten aufgenommenen Bildern, vorzugsweise aus der Differenz von dreidimensionalen Bilddaten oder Tiefenkarten, alternativ aus der Differenz von zweidimensionalen Bilddaten oder Grauwert- beziehungsweise Intensitätsbildern.

Als ausgangsseitige Merkmale 28a-b werden entweder schon erkannte Objekte und Klassen von Objekten oder Merkmale 28a-b ausgegeben, aus denen sich dies einfach und ohne erneuten Rückgriff auf Verfahren des maschinellen Lernens abgeleitet werden kann. Die schematischen Schieber 32 unten in Figur 2 sind noch an eine Farbmischung angelehnt. Sie sollen verdeutlichen, dass eine gemeinsame Entscheidung über alle eingangsseitigen Bildmodalitäten getroffen wird, diese aber noch unterschiedlich gewichtet werden können.

Es ist möglich, das neuronale Netz 24 von Grund auf mit Trainingsdaten in den erfindungsgemäß vorgesehenen Bildmodalitäten zu trainieren. Solche Trainingsdaten werden im Folgenden als anwendungsspezifisch bezeichnet, und solche Trainingsdaten können zwar gewonnen werden, jedoch bei Weitem nicht in dem Umfang, in dem sich frei verfügbare allgemeine Bilddaten finden lassen. Daher wird bevorzugt das neuronale Netz 24 zunächst mit Farbbildern in den drei Farbkanälen vortrainiert. Erst dann erfolgt ein weiteres Training, Nachtraining oder Finetuning mit den vergleichsweise kostbaren anwendungsspezifischen Trainingsdaten. So wird das vortrainierte, erst einmal auf Farbbildverarbeitung ausgelegte neuronale Netz 24 für die erfindungsgemäßen Bildmodalitäten angepasst. Im Gegensatz zu Farbkanälen zeichnen sich die erfindungsgemäßen Bildmodalitäten in besonderem Maße durch komplementäre oder unabhängige Informationen und Merkmale aus, so wird eine hohe Zuverlässigkeit und Robustheit erreicht.

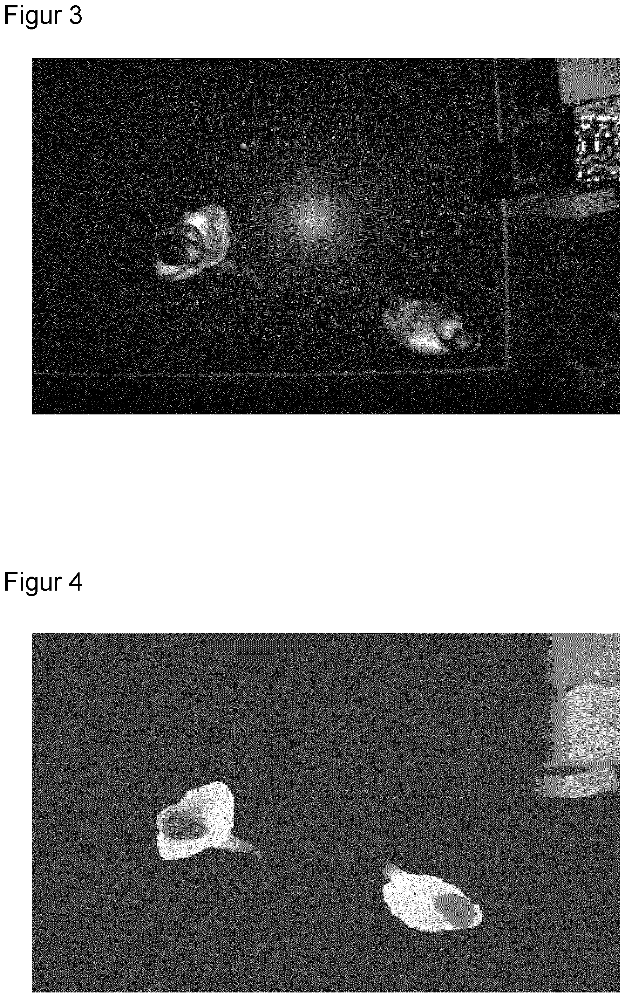

Um die erfindungsgemäßen Bildmodalitäten noch etwas genauer zu betrachten, zeigt zunächst Figur 3 ein Beispiel für zweidimensionale Bilddaten, die ohne Beschränkung der Allgemeinheit dem ersten Eingangskanal 26a des neuronalen Netzes gemäß Figur 2 zugeführt werden. In diesem Bild finden sich die Informationen über die zweidimensionalen Formen, über Helligkeiten und Kontrasten. Konkret wurde in diesem Beispielbild ein Intensitätsbild im nahen Infrarotbereich aufgenommen. Andere Varianten eines Grauwert- oder Intensitätsbildes unter natürlicher Beleuchtung oder einer künstlichen Beleuchtung in einem anderen Spektrum sind ebenfalls möglich. Der erste Eingangskanal 26a ist einem herkömmlichen RGB-Kanal am ähnlichsten, so dass ein aus Farbbildern vortrainiertes Netz mit dieser Bildmodalität gut zurechtkommen sollte, also bereits eine recht verlässliche Objekterkennung und Klassifizierung liefert. Es ist denkbar, die zweidimensionalen Bilddaten dem neuronalen Netz 24 vorgelagert schon vorzuverarbeiten, beispielsweise eine Ausblendung eines Hintergrundes vorzunehmen, der insbesondere aus den dreidimensionalen Bilddaten mit einem Abstandskriterium sehr einfach erkannt werden kann. Dadurch entfällt eine mögliche Quelle für Fehldetektionen, die Auswertung wird stärker auf die relevanten Objekte im Vordergrund gelenkt.

Figur 4 zeigt ein Beispiel für dreidimensionale Bilddaten, die dem zweiten Eingangskanal 26b des neuronalen Netzes 24 gemäß Figur 2 zugeführt werden. Eine solche Tiefenkarte oder ein Tiefenbild enthält Abstände, damit 3D-Konturinformationen der Objekte, allgemein 3D-Formen und -Größen, Orientierung und Bezug zu einer Bodenebene. Das Format ist einem Farb- und einem Intensitätsbild sehr ähnlich, da auch hier jedem Pixel ein Zahlenwert zugeordnet ist, nur im dreidimensionalen Fall einen Abstandswert statt eines Intensitäts- oder Grauwerts wie im zweidimensionalen Fall, nun statt einer Intensität. Ein etwaiger Auflösungsunterschied kann durch Vorverarbeitung ausgeglichen werden. Inhaltlich sind aber die Informationen sehr komplementär. Außerdem bieten dreidimensionale Bilddaten schon in sich hohe Robustheit gegenüber Kontrastschwankungen oder Umgebungslichteinflüssen. Auch in den dreidimensionalen Bilddaten kann vorab ein Hintergrund ausgeblendet werden, der beispielsweise initial eingelernt wurde.

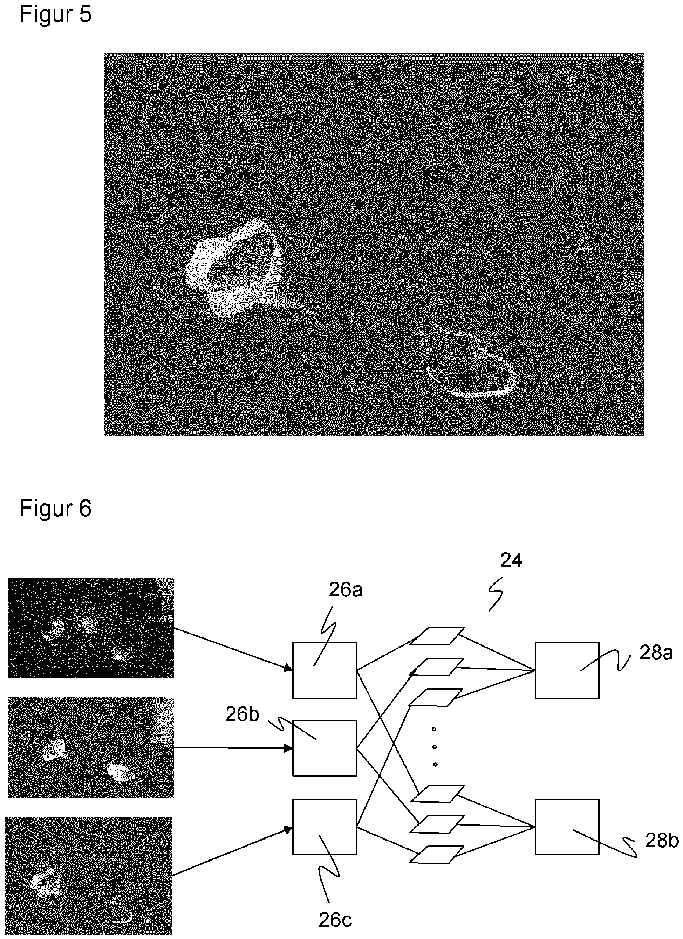

Figur 5 zeigt ein Beispiel für Differenzbilddaten, die dem dritten Eingangskanal 26c des neuronalen Netzes 24 gemäß Figur 2 zugeführt werden. Es ist dafür die Differenz zwischen zwei zu unterschiedlichen Zeiten aufgenommenen Bildern gebildet worden. Die Bilder können unmittelbar oder mit einem größeren Versatz nacheinander in einer Bildsequenz aufgenommen sein. Das gezeigte Differenzbild ist aus dreidimensionalen Bilddaten gewonnen, also zwei zu unterschiedlichen Zeitpunkten aufgenommenen Tiefenkarten entsprechend Figur 4. Alternativ kann ein Differenzbild aus zweidimensionalen Bilddaten erzeugt werden, also zwei zu unterschiedlichen Zeitpunkten aufgenommenen Intensitäts- oder Grauwertbildern entsprechend Figur 3.

In einem Differenzbild verbleiben allgemein die Änderungen, die wiederum in erster Linie durch Bewegungen verursacht werden. Es enthält Informationen über veränderte Positionen, Bewegungsrichtungen, Geschwindigkeiten und Formänderungen. Im dreidimensionalen Fall werden insbesondere bewegte Objektkanten und Objektflächen, die gegenüber der Bodenebene geneigt sind, besonders hervorgehoben. Die Auswertung des Differenzbildes ist sehr sensitiv auf bewegte Objekte und unempfindlich gegen Bewegungsunschärfe. Durch die Differenzbildung werden zudem Veränderungen des Hintergrundes unterdrückt. Das Merkmal "Bewegung" ist ein sehr starkes Merkmal für sicherheitstechnische Anwendungen und gerade im Zusammenhang mit Personen sehr zuverlässig.

Figur 6 zeigt eine schematische Darstellung der Zuordnung der verschiedenen Bildmodalitäten zu den Eingangskanälen 26a-c des neuronalen Netzes 24 gemäß Figur 2. Auf der linken Seite sind die drei zu den Figuren 3 bis 5 vorgestellten Eingangsbilder noch einmal dargestellt und ihren Eingangskanälen 26a-c zugeordnet. Durch die unterschiedlichen eingangsseitigen Bildmodalitäten stehen dem neuronalen Netz 24 mit reinen Bildmerkmalen, 3D-Geometriemerkmalen und Bewegungsmerkmalen sehr zuverlässige und eindeutige Merkmale für die Erkennung und Klassifizierung der Objekte zur Verfügung. Prinzipiell ist jeder Kanal für sich schon in der Lage, Personen zu erkennen. Durch den erfindungsgemäßen diversitär-redundanten Ansatz wird diese Erkennung wesentlich robuster und verlässlicher. Wenn nun ein Störeinfluss, wie zum Beispiel der Kontrastverlust durch Verschmutzung, einen Kanal beeinträchtigt, dann bleibt die Erkennung und Klassifizierung mit den verbliebenen Informationen der anderen Kanäle immer noch verlässlich. Ferner ist ein Quervergleich zwischen den Kanälen denkbar, der die Übereinstimmung der Klassifikation prüft und daraus Schlüsse zieht, welches Fehlerbild möglicherweise vorliegt. Solche Schlüsse können in Form von Signaturen, typischen Abweichungen zwischen den Kanälen formal gefasst werden.

Die beschriebene Vorgehensweise mit einem Vortraining in gewöhnlichen Farbkanälen und einem Nachtraining auf die speziellen erfindungsgemäßen Bildmodalitäten ist deshalb möglich, weil grundsätzliche Merkmale von Personen, die aus einem Farbbild gelernt wurden, sich ohnehin in einem Intensitätsbild, aber auch in den Formen und Bewegungsmustern der beiden anderen Bildmodalitäten jedenfalls in Grundzügen wiederfinden. Alternativ kann ein neuronales Netz 24 ohne Vortraining allein auf Basis von passenden Trainingsdatensätzen in den erfindungsgemäßen Bildmodalitäten trainiert werden. Damit ist der Vorteil, dass die wesentlichen Merkmale von Personen bereits aus großen, einfach verfügbaren Trainingsdatensätzen gelernt werden können, jedoch verloren, es steigt mit anderen Worten der Trainingsaufwand, weil viel mehr anwendungsspezifische Trainingsdaten gewonnen werden müssen.

Die Erfindung erleichtert auch die in sicherheitstechnischer Anwendung wichtige Nachweisführung der Robustheit. Es können, wie durch die Schieber 32 der Figur 2 angedeutet, gezielt Kanäle verstärkt und abgeschwächt werden, um die Performance des neuronalen Netzes 24 unter den jeweils veränderten Bedingungen zu untersuchen. Dieses Vorgehen kann als Teil der Freigabetests definiert werden.

Neben dieser Robustheitsprüfung vor dem eigentlichen Einsatz können die mehreren Kanäle auch zur Laufzeit als Detektionsmechanismus für Störeinflüsse zum Einsatz kommen. Ein Wegfall oder Teilverlust von Bildmerkmalen, beispielsweise der Abbildungsschärfe bei Verschmutzung, wird sich in sehr erkennbar anderen die Aktivierungsmusters oder sonstigen Laufzeitindikatoren beziehungsweise darauf zugeschnittenen Störsignaturen äußern.

Die gezeigte dreikanalige Architektur ist im Hinblick auf Handhabung und Leistungsfähigkeit bevorzugt. Dennoch wäre alternativ denkbar, drei parallele Teilnetze für jeweils eine Bildmodalität einzusetzen und dann anschließend die Teilergebnisse mit klassischen Verfahren oder einem weiteren neuronalen Netz zusammenzuführen. Der Gedanke der dreifachen Diversität ist auch auf andere Bildmodalitäten erweiterbar, wobei die Voraussetzung erfüllt sein muss, dass gute, unabhängige Merkmale enthalten sind.

## Patentansprüche

1. Vorrichtung (10) zur sicheren Erkennung und Klassifizierung von Objekten für die Überwachung mindestens einer Maschine (12), wobei die Vorrichtung (10) mindestens einen Bildsensor (18) für die Erfassung von zweidimensionalen Bilddaten und dreidimensionalen Bilddaten sowie eine Steuer- und Auswertungseinheit (22) aufweist, die für ein Verfahren des maschinellen Lernens zur Erkennung und Klassifizierung der Objekte ausgebildet ist, das einen ersten Eingangskanal (26a) für zweidimensionale Bilddaten und einen zweiten Eingangskanal (26b) für dreidimensionale Bilddaten aufweist und somit aus den zweidimensionalen Bilddaten und dreidimensionalen Bilddaten gemeinsam die Objekte erkennt und klassifiziert,
**dadurch gekennzeichnet,**
**dass** das Verfahren des maschinellen Lernens einen dritten Eingangskanal (26c) für aus Bilddaten des Bildsensors (18) gewonnene weitere Bildmerkmale aufweist und somit aus einer zusätzlichen Bildmodalität neben zweidimensionalen und dreidimensionalen Bilddaten gemeinsam die Objekte erkennt und klassifiziert.

2. Vorrichtung (10) nach Anspruch 1,
wobei die zweidimensionalen Bilddaten für den ersten Eingangskanal (26a) ein Grauwertbild aufweisen, insbesondere ein unter Infrarotbeleuchtung aufgenommenes Grauwertbild.

3. Vorrichtung (10) nach Anspruch 1 oder 2,
wobei die dreidimensionalen Bilddaten für den zweiten Eingangskanal (26b) eine Tiefenkarte aufweisen.

4. Vorrichtung (10) nach einem der vorhergehenden Ansprüche,
wobei die Steuer- und Auswertungseinheit (22) dafür ausgebildet ist, Differenzbilddaten aus zu verschiedenen Zeitpunkten aufgenommenen zweidimensionalen Bilddaten zu erzeugen und dem dritten Eingangskanal (26c) zuzuführen.

5. Vorrichtung (10) nach einem der vorhergehenden Ansprüche,
wobei die Steuer- und Auswertungseinheit (22) dafür ausgebildet ist, Differenzbilddaten aus zu verschiedenen Zeitpunkten aufgenommenen dreidimensionalen Bilddaten zu erzeugen und dem dritten Eingangskanal (26c) zuzuführen.

6. Vorrichtung (10) nach einem der vorhergehenden Ansprüche,
wobei die Erkennung und Klassifizierung eine Personenerkennung und/oder eine Körperteilerkennung umfasst.

7. Vorrichtung (10) nach einem der vorhergehenden Ansprüche,
wobei die Erkennung und Klassifizierung eine Bestimmung von Position und/oder Bewegung der Objekte und/oder eine sichere Objektverfolgung umfasst.

8. Vorrichtung nach einem der vorhergehenden Ansprüche,
wobei die Steuer- und Auswertungseinheit für einen Quervergleich ausgebildet ist, der die Übereinstimmung der Klassifikation der Objekte aus den Eingangskanälen bewertet.

9. Vorrichtung (10) nach einem der vorhergehenden Ansprüche,
wobei das Verfahren des maschinellen Lernens ein neuronales Netz (24) aufweist, insbesondere ein tiefes Faltungsnetz.

10. Vorrichtung (10) nach Anspruch 9,
wobei das neuronale Netz (24) eine dreikanalige Architektur mit drei Netz-Eingangskanälen aufweist, wobei der erste Eingangskanal (26a), der zweite Eingangskanal (26b) und der dritte Eingangskanal (26c) auf die drei Netz-Eingangskanäle geführt sind.

11. Vorrichtung (10) nach Anspruch 10,
wobei das neuronale Netz (24) eine dreikanalige Architektur eines neuronalen Netzes für die Verarbeitung der drei Farbkanäle eines zweidimensionalen Farbbildes nutzt.

12. Vorrichtung (10) nach Anspruch 11,
wobei das neuronale Netz (24) mit Farbbildern vortrainiert ist, indem während eines Vortrainings jeweils einer der drei Farbkanäle des jeweiligen Farbbildes auf jeweils einen der drei Netz-Eingangskanäle geführt ist.

13. Vorrichtung (10) nach einem der vorhergehenden Ansprüche,
wobei der Bildsensor (18) dreidimensionale Bilddaten nach dem Lichtlaufzeitprinzip erfasst.

14. Vorrichtung (10) nach einem der vorhergehenden Ansprüche,
wobei die Steuer- und Auswertungseinheit (22) dafür ausgebildet ist, eine Absicherung der Maschine (12) auszulösen, wenn sich ein erkanntes Objekt an einer gefährlichen Position und/oder in einer gefährlichen Bewegung befindet.

15. Verfahren zur sicheren Erkennung und Klassifizierung von Objekten für die Überwachung mindestens einer Maschine (12), wobei zweidimensionale Bilddaten und dreidimensionale Bilddaten aufgenommen und mit einem Verfahren des maschinellen Lernens zur Erkennung und Klassifizierung der Objekte ausgewertet werden, das einen ersten Eingangskanal (26a) für zweidimensionale Bilddaten und einen zweiten Eingangskanal (26b) für dreidimensionale Bilddaten aufweist und somit aus den zweidimensionalen Bilddaten und dreidimensionalen Bilddaten gemeinsam die Objekte erkennt und klassifiziert,
**dadurch gekennzeichnet,**
**dass** das Verfahren des maschinellen Lernens einen dritten Eingangskanal (26c) für aus Bilddaten des Bildsensors gewonnene weitere Bildmerkmale aufweist und somit aus einer zusätzlichen Bildmodalität neben zweidimensionalen und dreidimensionalen Bilddaten gemeinsam die Objekte erkennt und klassifiziert.

## Geänderte Patentansprüche

### Geänderte Patentansprüche gemäss Regel 137(2) EPÜ.

1. Vorrichtung (10) zur sicheren Erkennung und Klassifizierung von Objekten für die Überwachung mindestens einer Maschine (12), wobei die Vorrichtung (10) mindestens einen Bildsensor (18) für die Erfassung von zweidimensionalen Bilddaten und dreidimensionalen Bilddaten sowie eine Steuer- und Auswertungseinheit (22) aufweist, die für ein Verfahren des maschinellen Lernens zur Erkennung und Klassifizierung der Objekte ausgebildet ist, das einen ersten Eingangskanal (26a) für zweidimensionale Bilddaten, einen zweiten Eingangskanal (26b) für dreidimensionale Bilddaten und einen dritten Eingangskanal (26c) für aus Bilddaten des Bildsensors (18) gewonnene Bilddaten einer zusätzlichen Bildmodalität aufweist und somit aus den zweidimensionalen Bilddaten, den dreidimensionalen Bilddaten und den Bilddaten der zusätzlichen Bildmodalität gemeinsam die Objekte erkennt und klassifiziert,
**dadurch gekennzeichnet,**
**dass** die Bilddaten der zusätzlichen Bildmodalität Differenzbilddaten aus zu verschiedenen Zeitpunkten aufgenommenen zweidimensionalen oder dreidimensionalen Bilddaten sind, dass die Erkennung und Klassifizierung eine Personenerkennung und/oder eine Körperteilerkennung umfasst und dass die Steuer- und Auswertungseinheit (22) ferner dafür ausgebildet ist, eine Absicherung der Maschine (12) auszulösen, wenn sich ein erkanntes Objekt an einer gefährlichen Position und/oder in einer gefährlichen Bewegung befindet.

2. Vorrichtung (10) nach Anspruch 1,
wobei die zweidimensionalen Bilddaten für den ersten Eingangskanal (26a) ein Grauwertbild aufweisen, insbesondere ein unter Infrarotbeleuchtung aufgenommenes Grauwertbild.

3. Vorrichtung (10) nach Anspruch 1 oder 2,
wobei die dreidimensionalen Bilddaten für den zweiten Eingangskanal (26b) eine Tiefenkarte aufweisen.

4. Vorrichtung (10) nach einem der vorhergehenden Ansprüche,
wobei die Erkennung und Klassifizierung eine Bestimmung von Position und/oder Bewegung der Objekte und/oder eine sichere Objektverfolgung umfasst.

5. Vorrichtung nach einem der vorhergehenden Ansprüche,
wobei die Steuer- und Auswertungseinheit für einen Quervergleich ausgebildet ist, der die Übereinstimmung der Klassifikation der Objekte aus den Eingangskanälen bewertet.

6. Vorrichtung (10) nach einem der vorhergehenden Ansprüche,
wobei das Verfahren des maschinellen Lernens ein neuronales Netz (24) aufweist, insbesondere ein tiefes Faltungsnetz.

7. Vorrichtung (10) nach Anspruch 9,
wobei das neuronale Netz (24) eine dreikanalige Architektur mit drei Netz-Eingangskanälen aufweist, wobei der erste Eingangskanal (26a), der zweite Eingangskanal (26b) und der dritte Eingangskanal (26c) auf die drei Netz-Eingangskanäle geführt sind.

8. Vorrichtung (10) nach Anspruch 10,
wobei das neuronale Netz (24) eine dreikanalige Architektur eines neuronalen Netzes für die Verarbeitung der drei Farbkanäle eines zweidimensionalen Farbbildes nutzt.

9. Vorrichtung (10) nach Anspruch **11,**
wobei das neuronale Netz (24) mit Farbbildern vortrainiert ist, indem während eines Vortrainings jeweils einer der drei Farbkanäle des jeweiligen Farbbildes auf jeweils einen der drei Netz-Eingangskanäle geführt ist.

10. Vorrichtung (10) nach einem der vorhergehenden Ansprüche,
wobei der Bildsensor (18) dreidimensionale Bilddaten nach dem Lichtlaufzeitprinzip erfasst.

11. Verfahren zur sicheren Erkennung und Klassifizierung von Objekten für die Überwachung mindestens einer Maschine (12), wobei zweidimensionale Bilddaten und dreidimensionale Bilddaten aufgenommen und mit einem Verfahren des maschinellen Lernens zur Erkennung und Klassifizierung der Objekte ausgewertet werden, das einen ersten Eingangskanal (26a) für zweidimensionale Bilddaten, einen zweiten Eingangskanal (26b) für dreidimensionale Bilddaten und einen dritten Eingangskanal (26c) für aus Bilddaten des Bildsensors gewonnene Bilddaten einer zusätzlichen Bildmodalität aufweist und somit aus den zweidimensionalen Bilddaten, den dreidimensionalen Bilddaten und den Bilddaten der zusätzlichen Bildmodalität gemeinsam die Objekte erkennt und klassifiziert,
**dadurch gekennzeichnet,**
**dass** die Bilddaten der zusätzlichen Bildmodalität Differenzbilddaten aus zu verschiedenen Zeitpunkten aufgenommenen zweidimensionalen oder dreidimensionalen Bilddaten sind, dass die Erkennung und Klassifizierung eine Personenerkennung und/oder eine Körperteilerkennung umfasst und dass eine Absicherung der Maschine (12) ausgelöst wird, wenn sich ein erkanntes Objekt an einer gefährlichen Position und/oder in einer gefährlichen Bewegung befindet.
